Europäisches Patentamt

European Patent Office

Office européen des brevets

(19)

(11) Veröffentlichungsnummer : **0 072 564**
**B1**

(12) EUROPÄISCHE PATENTSCHRIFT

(45) Veröffentlichungstag der Patentschrift :
**09.10.85**

(51) Int. Cl.⁴ : **G 21 C 17/10**

(21) Anmeldenummer : **82107456.4**

(22) Anmeldetag : **17.08.82**

(54) Einrichtung zur Ermittlung der an den Einbauten eines Reaktordruckbehälters auftretenden Schwingungen.

(30) Priorität : **19.08.81 DE 3132738**

(43) Veröffentlichungstag der Anmeldung :
**23.02.83 Patentblatt 83/08**

(45) Bekanntmachung des Hinweises auf die Patenterteilung : **09.10.85 Patentblatt 85/41**

(84) Benannte Vertragsstaaten :
**CH DE FR LI**

(56) Entgegenhaltungen :
**DE-A- 2 532 247**
**FR-A- 2 065 512**
**FR-A- 2 467 394**
**GB-A- 1 030 679**
**GB-A- 1 046 624**
**GB-A- 1 293 109**
**US-A- 4 047 103**
**US-A- 4 070 239**

(73) Patentinhaber : **BROWN BOVERI REAKTOR GmbH**
**Dudenstrasse 44**
**D-6800 Mannheim 1 (DE)**

(72) Erfinder : **Day, Bobby Lee**
**Haydnstrasse 22**
**D-6909 Walldorf (DE)**

(74) Vertreter : **Dahlmann, Gerhard, Dipl.-Ing. et al**
**c/o Brown Boveri & Cie., AG Zentralbereich ZPT/P**
**Postfach 351**
**D-6800 Mannheim (DE)**

Beschreibung

Die Erfindung betrifft einen Kernreaktor mit einem den Reaktorbehälter durchdringenden Führungsrohr, in dem ein Meßinstrument bewegbar ist, wobei das Innere des Führungsrohres mit dem Kühlmittel des Reaktorbehälters verbunden und an seinem außerhalb des Reaktorbehälters angeordneten Ende topfförmig erweitert ist.

Ein derartiger Kernreaktor ist aus der US-A-4 070 239 bekannt. Dort wird ein Ventil beschrieben, das eine Sondenbeschickungsstation zur Überprüfung des Neutronenflusses im Reaktorkern absperrt oder öffnet. Der Meßbereich der Sonde erstreckt sich offenbar über die gesamte Kernhöhe und die Sonde ist dazu in einem ebenfalls über die Kernhöhe erstreckten Führungsrohr frei bewegbar. Über die Art der Sondenbewegung bzw. über eine Arretierung der Sonde ist in der US-A-4 070 239 nichts ausgesagt.

Aus der FR-A-2 467 394 ist ein Schwingungsmeßgerät bekannt, das mit Hilfe einer Meßlanze in dem zu überprüfenden Bauteil festlegbar ist. Das Meßgerät ist dabei nicht von einem Gehäuse umgeben. Es ist vielmehr durch seitliche Öffnungen des Lanzenkopfes unmittelbar mit dem zu überprüfenden Bauteil verbindbar. Mit der unmittelbaren Festlegung des Schwingungsmeßgerätes am zu überprüfenden Bauteil soll wegen der großen Mass des Meßlanzenkörpers eine Entkoppelung von der selben erzielt werden. Die Meßlanze verbleibt dabei offenbar während des Prüfvorganges am Ort der Prüfung und ist lediglich vom Meßgerät entkoppelt. Daher kann diese Einrichtung nicht während des Betriebes einer Kernreaktoranlage innerhalb eines Reaktorbehälters eingesetzt werden.

Weiterhin ist aus der GB-A-10 46 624 ein Kanalsystem bekannt, das in einer Betonabschirmung endet und eine Sonde zur Strahlenmessung aufnimmt. Eine Schwingungsmessung an den jenseits der Betonabschirmung angeordneten Kerneinbauten ist mit einer derartigen Einrichtung nicht möglich.

Ferner ist aus der DE-A-25 32 247 eine Einrichtung bekannt, bei der die Schwingungen von Kerneinbauten eines Kernreaktors mit einem seismischen Schwingwegaufnehmer ermittelt werden. Der Schwingwegaufnehmer ist hierzu an den zu überwachenden Bauteilen angeschraubt. Bei Austausch oder Reparatur des Schwingwegaufnehmers während des jährlich bei geöffnetem Reaktordruckbehälter stattfindenden Brennelementwechsels ist bei Verwendung im Bereich der Reaktordruckbehältereinbauten mit einer erheblichen Strahlenbelastung des Bedienungspersonals zu rechnen. Weiterhin ist der Ein- und Ausbau mit stangenförmigen Werkzeugen zur Überwindung des durch eine abschirmende Wasserschicht gegebenen Abstandes umständlich und zeitaufwendig.

Es ist die Aufgabe der Erfindung bei einem Kernreaktor der eingangs genannten Art eine Schwingungsmeßeinrichtung anzugeben, die während des Betriebes der Reaktoranlage eine Festlegung des Schwingwegaufnehmers unter Belassung eines Bewegungsspielraumes von außerhalb des Reaktorbehälters ermöglicht und nach dem Abschalten der Reaktoranlage einen Zugang zum Schwingwegaufnehmer ohne Entfernen des Reaktorbehälter-Deckels sicherstellt.

Gelöst wird diese Aufgabe erfindungsgemäß dadurch, daß das Meßinstrument ein in einem Gehäuse eingeschlossener Schwingwegaufnehmer ist, daß das Gehäuse mit einer biegsamen Stange verbunden ist, daß die Stange in das topfförmig ausgebildete Ende des Führungsrohres ragt und dort mit einem Joch verbunden ist, daß das Joch über eine an einem das topfförmige Ende des Führungsrohres verschließenden Deckel abgestützte Feder mit einem vorgebbaren Druck beaufschlagbar ist und daß bei Bestehen der Kupplungsverbindung zwischen einem mit den Einbauten des Reaktorbehälters verbundenen Aufnahmeteil und dem Gehäuse ein Spiel zwischen dem Joch und dem Boden des topfförmig ausgebildeten Endes des Führungsrohres besteht. Damit wird die Verbindung zwischen Gehäuse und Aufnahmeteil mit einem gleichmäßigen Anpressdruck ausgestattet. Außerdem lassen sich Relativbewegungen zwischen dem Führungsrohr und dem Reaktorbehälter kompensieren.

Gemäß einer bevorzugten Ausgestaltung ist der Mantel des Gehäuses zylinderförmig ausgebildet, der Zylinder ragt in eine Bohrung eines Aufnahmeteils und der Wärmeausdehnungskoeffizient der Werkstoffe von Gehäuse und Aufnahmeteil ist derart gewählt, daß bei drucklosem Reaktorbehälter das Gehäuse in der Bohrung des Aufnahmeteils in axialer Richtung bewegbar ist und mit steigender Temperatur des im Reaktorbehälter angeordneten Primärkühlmittels die Mantelfläche des Gehäuses und die Innenfläche der Bohrung des Aufnahmeteils mit wachsendem Druck aneinandergepreßt werden.

Eine andere Lösung der Aufgabe sieht vor, daß das Meßinstrument ein in einem Gehäuse eingeschlossener Schwingwegaufnehmer ist, daß das Gehäuse mit einer biegsamen Stange verbunden ist, daß die Stange in das topfförmig ausgebildete Ende des Führungsrohres ragt und dort mit einem Kolben verbunden ist, daß der Kolben innerhalb des als Zylinder wirkenden topfförmig ausgebildeten freien Endes des Führungsrohres zusammen mit der Stange bewegbar ist, so daß eine Bewegung des Gehäuses in seine Meßposition in einen mit den Einbauten des Reaktorbehälters verbundenen Aufnahmeteil oder aus dem Aufnahmeteil heraus bewirkt werden kann, und daß zur Steuerung der Bewegung der Kolben mit unterschiedlichen Drücken beaufschlagbar ist. Mit dieser Ausbildung läßt sich das Gehäuse mit dem Schwingwegaufnehmer während des Reaktorbetriebes aus dem Aufnahmeteil herausziehen, in einem außerhalb des Reaktordruckbehälters befindlichen Bereich des Führungsrohres stationieren und wieder in den Aufnahmeteil einfahren. Somit können in periodischen Abständen die Schwingungen an den Einbauten gemessen werden. Durch das Herausfahren des Gehäuses nach erfolgter Messung aus dem unmittelbaren aktiven Bereich wird die Lebensdauer des Schwingwegaufnehmers erhöht.

Zur Steuerung des Kolbens wird vorgeschlagen, daß die dem Reaktorbehälter zugewandte Kolbenseite ständig von dem in dem selben herrschenden Druck beaufschlagt und die gegenüberliegende Kolbenseite von einem ober- oder unterhalb dieses Druckes liegenden Druck beaufschlagbar ist.

Dabei ist der Raum oberhalb der dem Reaktorbehälter abgewandten Kolbenseite wahlweise mit der Sperrwasserversorgung der Hauptkühlmittelpumpe oder mit deren Saugseite verbunden.

Anhand von verschiedenen Ausführungsbeispielen und der Figuren 1-4 wird die Einrichtung beschrieben. Dabei zeigen

Figur 1a ein Gehäuse mit einem Schwingwegaufnehmer und mit mechanischen und elektrischen Verbindungselementen,

Figur 1b eine andere Ausbildung des Gehäuses nach Fig. 1a,

Figur 1c eine weitere Ausbildung des Gehäuses,

Figur 2 eine Anordnung zur Prüfung von Kerneinbauten von der Reaktordruckbehälterunterseite her,

Figur 3 eine Anordnung zur Unterstützung der Anpreßkraft der Kegelverbindung,

Figur 4 eine Anordnung zum Bewegen des Schwingwegaufnehmers während des Reaktorbetriebs und

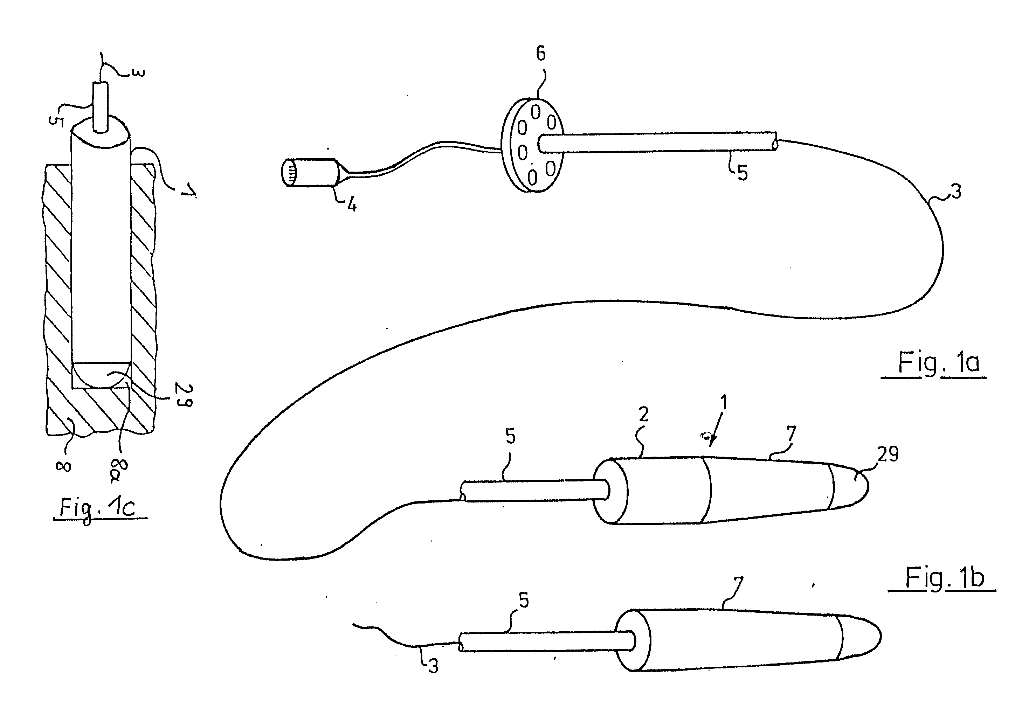

Die Fig. 1a zeigt ein Gehäuse 1 zur Aufnahme eines als Beschleunigungsmeßwertaufnehmer ausgebildeten Schwingwegaufnehmers.

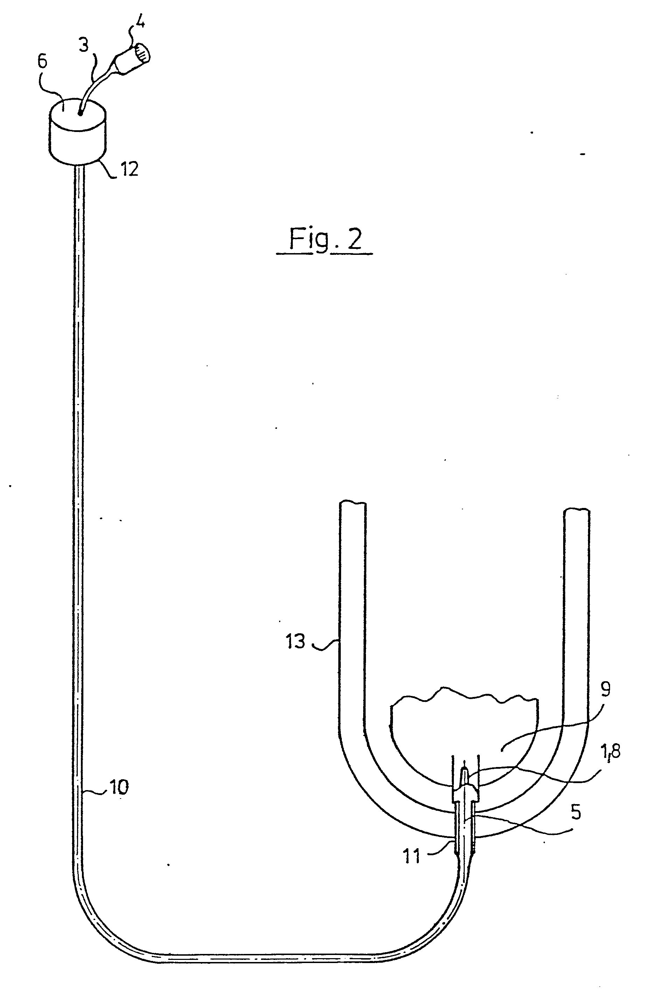

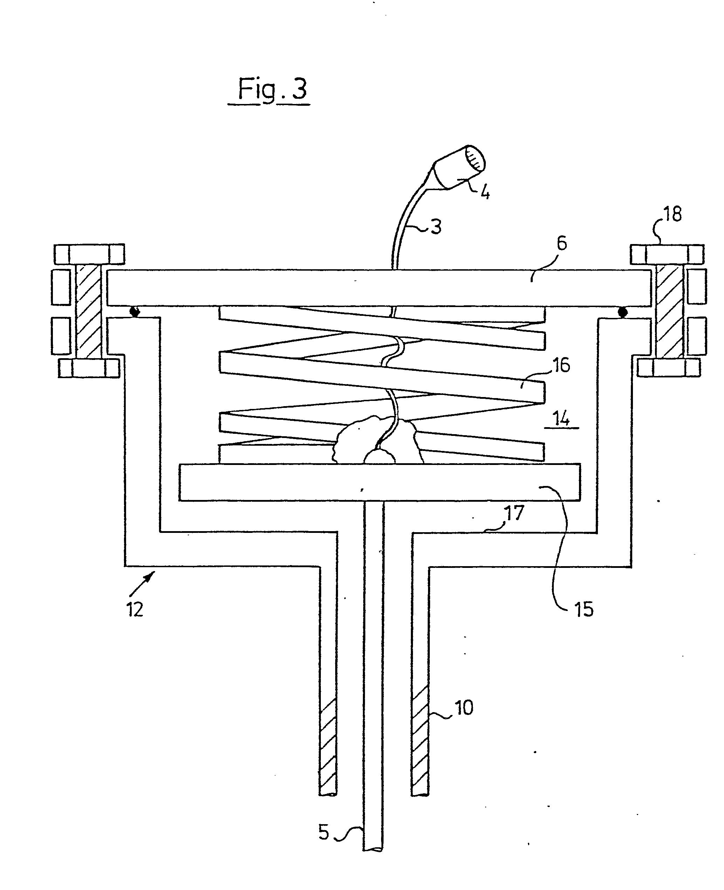

Der Schwingwegaufnehmer ist im zylindrischen Teilbereich 2 des Gehäuses untergebracht und über das Kabel 3 mit einem Steckerkupplungsstück 4 verbunden, das zu einer nicht dargestellten Auswerteeinheit führt. Das Kabel ist entlang einer biegsamen Stange 5 oder durch dieselbe geführt, die sich von dem Gehäuse zu einem Deckel 6 erstreckt. Das Gehäuse weist weiterhin einen kegeligen Teilbereich 7 auf, der dieselbe Steigung besitzt wie der Kegel eines mit den Kerneinbauten (Fig. 2 und 3) starr verbundenen Aufnahmeteils 8. Die abgerundete Spitze 29 des Gehäuses dient lediglich zu deren Zentrierung bei der Einführung in das Aufnahmeteil.

Gemäß Fig. 1b besteht das Gehäuse neben der abgerundeten Spitze nur aus einem kegeligen Bereich. Der Schwingwegaufnehmer nimmt dabei den Innenraum des gesamten kegelförmigen Mantels ein. Je nach den an den Kerneinbauten 9 herrschenden Platzverhältnissen bzw. je nach der Größe des Innendurchmessers des Führungsrohres wird die Bauweise nach Fig. 1a oder 1b eingesetzt. Beide Gehäuseausführungen ergeben zusammen mit dem den Einbauten zugeordneten Aufnahmeteil eine leicht lösbare Kegelverbindung, die wegen ihrer relativ großen Übertragungsfläche eine empfindliche Schwingwegaufnahme gewährleisten.

Eine andere Ausbildung der Verbindung zwischen Gehäuse 1 und Aufnahmeteil 8 zeigt die Fig. 1c. Der Mantel des Gehäuses stellt dabei einen Zylinder mit abgerundeter Spitze 29 dar. Der Zylinder ist in einer ebenfalls zylindrischen Bohrung 8a des Aufnahmeteils 8 angeordnet. Hierbei wird als Gehäusewerkstoff ein solcher mit größerem Wärmeausdehnungskoeffizienten gewählt als ihn derjenige des Aufnahmeteils aufweist. Bei drucklosem Reaktor und niedriger Temperatur des das Aufnahmeteil umspülenden Primärkühlmittels läßt sich das zylindrische Gehäuse in der Bohrung 8a des Aufnahmeteils bewegen. Bei steigender Temperatur ist die Gehäusedehnung größer als diejenige des Aufnahmeteils 8. Das Spiel zwischen dem Gehäusezylinder und der Bohrung 8a wird aufgebraucht, so daß zwischen den Bauteilen eine Preßsitzverbindung entsteht. Während des Betriebes des Reaktoranlage erfolgt also eine unmittelbare Übertragung des Schwingweges der Einbauten und beim Stillstand der Anlage mit entsprechend niedrigerer Temperatur des Primärkühlmittels läßt sich das Gehäuse 1 leicht aus dem Aufnahmeteil 8 herausziehen.

Die Fig. 2 zeigt den Einsatz des Gehäuses an den Einbauten 9. Dabei erfolgt der Zugang des Gehäuses über ein an die Unterseite des Reaktordruckbehälters herangeführtes Führungsrohr 10, das an einem durch die Druckbehälterwandung geführten Stutzen 11 befestigt ist. Der Stutzen ist bis zu den Einbauten weitergeführt und mündet in einen mit denselben fest verbundenen Aufnahmeteil 8. Das freie Ende 12 des Führungsrohres ist topfförmig ausgebildet und mit einem Deckel 6 druckdicht verschlossen. Der Deckel bildet den Abschluß des Primärkühlmittels, das sich durch die Verbindung mit dem Reaktordruckbehälter 13 im Führungsrohr befindet. Durch den Deckel ist in abgedichteter Ausführung das Kabel 3 zur Übertragung der Signale des Schwingwegaufnehmers geführt, das über ein Steckerkupplungsstück 4 zu einer nichtdargestellten Auswerteeinheit gelangt. Eine biegsame Stange 5 ist an dem Gehäuse 1 befestigt und erstreckt sich durch das Führungsrohr 10 bis in dessen topfförmiges Ende 12.

Die Fig. 3 zeigt in vergrößerter Darstellung das topfförmig ausgebildete Ende 12 des Führungsrohres 10. In dessen Innenraum 14 ragt das dem Gehäuse 1 abgewandte Ende der biegsamen Stange 5 und ist dort mit einem tellerförmigen Joch 15 versehen. Eine Druckfeder 16 ist zwischen dem Joch 15 und dem Deckel 6 angeordnet und drückt über die biegsame Stange 5 das Gehäuse 1 in den Aufnahmeteil 8. Dabei verbleibt zwischen dem Joch und dem Boden 17 des topfförmig ausgebildeten Endes 12 ein Spiel. Somit ist ein gleichmäßiger Andruck der Kegelverbindung bzw. der Spitze 29 an den Boden der Bohrung 8a gemäß der Ausbildung nach Fig. 1c sowie eine Kompensierung der von den Anlagenteilen verursachten Wärmedehnung sichergestellt. Soll bei abgeschalteter Reaktoranlage der im Gehäuse angeordnete Schwingwegaufnehmer ausgetauscht oder repariert werden, so wird die Schraubverbindung 18 gelöst. Dann wird der Deckel 6 und die biegsame Stange 5 zusammen mit dem Gehäuse 1 und dem Joch 15 aus den Führungsrohr 10 entfernt und nach dem Auswechseln des Schwingwegaufnehmers in umgekehrter Reihenfolge eingebaut. Das Wartungspersonal ist dabei einer wesentlich geringeren Strahlenbelastung ausgesetzt als bei einem unmittelbar an den Einbauten vorgenommenen Austausch.

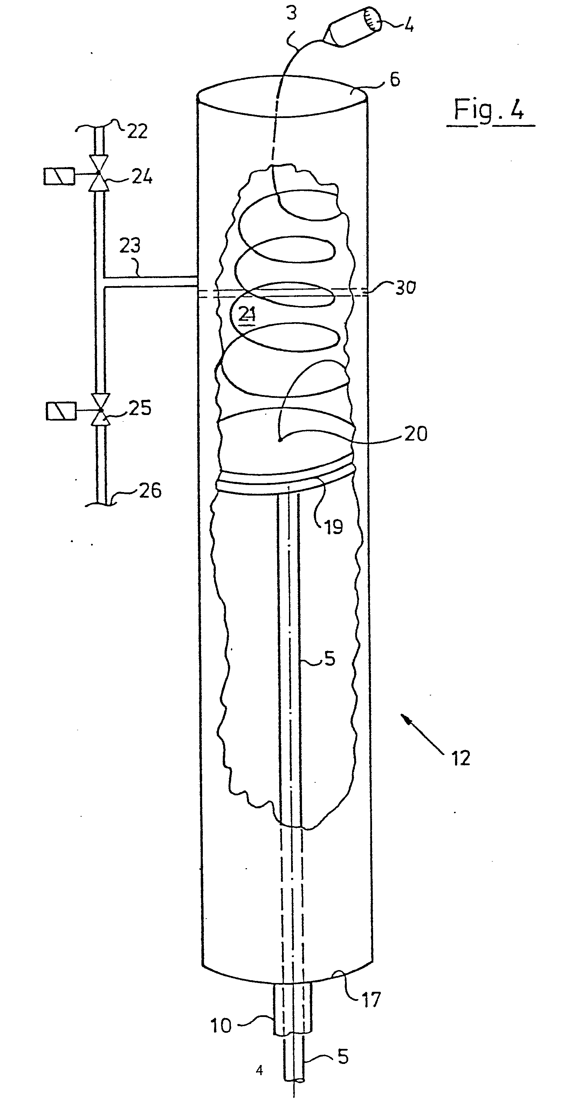

Soll während des Reaktorbetriebs ein Bewegen des Gehäuses zwischen seiner Meßposition im Aufnahmeteil und einer Position im Führungsrohr außerhalb des Druckbehälters 13 erforderlich sein, wird die in Fig. 4 dargestellte Ausbildung eines topfförmig ausgebildeten Endes 12 des Führungsrohres 10 eingesetzt. In dem als Zylinder wirkenden topfförmigen Ende 12 ist ein Kolben 19 angeordnet, der mit der biegsamen Stange 5 verbunden ist. Das Kabel 3 gelangt durch eine Kolbenöffnung 20 und durch den Deckel 6 zum Steckerkupplungsstück 4. Bis zu der dem Druckbehälter 13 zugewandten Kolbenseite herrscht im Führungsrohr der gleiche Druck wie innerhalb des Druckbehälters. In dem Raum 21 oberhalb des Kolbens herrscht entweder ein höherer oder ein niedrigerer Druck als im Druckbehälter. Ein höherer Druck bewirkt eine Bewegung des Gehäuses bis in den Aufnahmeteil und ein Beharren in dieser Position. Erzeugt wird dieser höhere Druck durch Anschluß des Raumes 21 an die Primärkühlmittel-Sperrwasserversorgung 22 der Reaktoranlage über die Leitung 23. Dabei ist das Ventil 24 geöffnet und das Ventil 25 geschlossen. Zwischen der Kolbenunterseite und dem Boden 17 des topfförmigen Endes verbleibt bei bestehender Kegelverbindung ein Spiel, um ein sattes Anliegen der Kegelflächen von Gehäuse und Aufnahmeteil zu gewährleisten. Ein niedrigerer Druck bewirkt eine Bewegung des Gehäuses aus dem Aufnahmeteil heraus bis zur Anlage des Kolbens 19 an dem Anschlag 30. Zur Aufnahme des Kabels bleibt oberhalb des Anschlages 30 ein ausreichender Raum. Erzeugt wird der genannte niedrigere Druck durch den Anschluß des Raumes 21 an die Saugseite 26 der Primärkühlmittelpumpe über die Leitung 23. Dabei ist das Ventil 25 geöffnet und das Ventil 24 geschlossen. Der somit während des Reaktorbetriebs verfahrbare Weg des Gehäuses 1 ist von der Länge des topfförmig ausgebildeten Endes 12 des Führungsrohres 10 abhängig. Aufgrund des periodischen Einsatzes verlängert sich die Lebensdauer des Schwingwegaufnehmers und damit seine Wartungsintervalle. Die Ausführung nach Fig. 4 ist nur für die kegelige Gehäuseausbildung der Fig. 1a und 1b geeignet, da die Ausbildung nach Fig. 1c während des Betriebes der Reaktoranlage eine Preßsitzverbindung darstellt.

Mit der erfindungsgemäßen Einrichtung ist sowohl eine kontinuierliche als auch eine periodische Ermittlung des Schwingweges von Kerneinbauten auf einfache Weise möglich. Dabei sinkt die Strahlenbelastung für das Wartungspersonal erheblich.

Bezugszeichenliste

| 1 | Gehäuse |
|---|---|
| 2 | zylindrischer Teilbereich |
| 3 | Kabel |
| 4 | Steckerkupplungsstück |
| 5 | biegsame Stange |
| 6 | Deckel |
| 7 | kegeliger Teilbereich |
| 8 | Aufnahmeteil |
| 8a | Bohrung |
| 9 | Kerneinbauten |
| 10 | Führungsrohr |
| 11 | Stutzen |
| 12 | freie Ende |
| 13 | Reaktordruckbehälter |
| 14 | Innenraum |
| 15 | Joch |
| 16 | Druckfeder |
| 17 | Boden |
| 18 | Schraubverbindung |
| 19 | Kolben |
| 20 | Kolbenöffnung |
| 21 | Raum |
| 22 | Sperrwasserversorgung |
| 23 | Leitung |
| 24, 25 | Ventil |
| 26 | Saugseite |
| 29 | Spitze |
| 30 | Anschlag |

## Patentansprüche

1. Kernreaktor mit einem den Reaktorbehälter durchdringenden Führungsrohr, in dem ein Meßinstrument bewegbar ist, wobei das Innere des Führungsrohres mit dem Kühlmittel des Reaktorbehälters verbunden und an seinem außerhalb des Reaktorbehälters angeordneten Ende topfförmig erweitert ist, dadurch gekennzeichnet, daß das Meßinstrument ein in einem Gehäuse (1) eingeschlossener Schwingwegaufnehmer ist, daß das Gehäuse mit einer biegsamen Stange (5) verbunden ist, daß die Stange in das topfförmig ausgebildete Ende (12) des Führungsrohres (10) ragt und dort mit einem Joch (15) verbunden ist, daß das Joch über eine an einem das topfförmige Ende des Führungsrohres verschließenden Deckel (6) abgestützte Feder (16) mit einem vorgebbaren Druck beaufschlagbar ist und daß bei bestehender Kupplungsverbindung zwischen einem mit den Einbauten des Reaktorbehälters verbundenen Aufnahmeteil (8) und dem Gehäuse (1) ein Spiel zwischen dem Joch (15) und dem Boden (17) des topfförmig ausgebildeten Endes (12) des Führungsrohres (10) besteht.

2. Kernreaktor nach Anspruch 1, dadurch gekennzeichnet, daß der Mantel des Gehäuses (1) ein Zylinder ist, daß dieser Zylinder in eine Bohrung (8a) des Aufnahmeteils (8) ragt und daß der Wärmeausdehnungskoeffizient der Werkstoffe von Gehäuse und Aufnahmeteil derart gewählt ist, daß bei drucklosem Reaktordruckbehälter das Gehäuse (1) in der Bohrung des Aufnahmeteils in axialer Richtung bewegbar ist und mit steigender Temperatur des im Reaktorbehälter angeordneten Primärkühlmittels die Mantelfläche des Gehäuses und die Innenfläche der Bohrung des Aufnahmeteils mit wachsendem Druck aneinander gepreßt werden.

3. Kernreaktor mit einem den Reaktorbehälter durchdringenden Führungsrohr, in dem ein Meßinstrument bewegbar ist, wobei das Innere des Führungsrohres mit dem Kühlmittel des Reaktorbehälters verbunden und an seinem außerhalb des Reaktorbehälters angeordneten Ende topfförmig erweitert ist, dadurch gekennzeichnet, daß das Meßinstrument ein in einem Gehäuse (1) eingeschlossener Schwingwegaufnehmer ist, daß das Gehäuse mit einer biegsamen Stange (5) verbunden ist, daß die Stange in das topfförmig ausgebildete Ende (12) des Führungsrohres (10) ragt und dort mit einem Kolben (19) verbunden ist, daß der Kolben innerhalb des als Zylinder wirkenden topfförmig ausgebildeten freien Endes (12) des Führungsrohres zusammen mit der Stange bewegbar ist, so daß eine Bewegung des Gehäuses in seine Meßposition in einem mit den Einbauten des Reaktorbehälters verbundenen Aufnahmeteil oder aus dem Aufnahmeteil heraus bewirkt werden kann, und daß zur Steuerung der Bewegung der Kolben mit unterschiedlichen Drücken beaufschlagbar ist.

4. Kernreaktor nach Anspruch 3, dadurch gekennzeichnet, daß die dem Reaktorbehälter (13) zugewandte Kolbenseite ständig von dem in dem selben herrschenden Druck beaufschlagt und die gegenüberliegende Kolbenseite von einem ober- oder unterhalb dieses Drucks liegenden Druck· beaufschlagbar ist.

5. Kernreaktor nach Anspruch 3 oder 4, dadurch gekennzeichnet, daß der Raum (21) oberhalb der dem Reaktorbehälter abgewandten Kolbenseite wahlweise mit der Sperrwasserversorgung (22) der Hauptkühlmittelpumpe oder mit deren Saugseite (26) verbunden ist.

## Claims

1. Nuclear reactor with a guide tube which penetrates the reactor vessel and in which a measuring instrument is movable, the interior of the guide tube being connected with the coolant of the reactor vessel and at its end disposed outside the reactor vessel being enlarged in a cup-shaped configuration, characterised in that the measuring instrument is a deflection detector enclosed in a housing (1), that the housing is connected with a flexible rod (5), that the rod projects into the end (12) — formed in a cup-shaped configuration — of the guide tube (10) and is there connected with a yoke (15), that the yoke can be acted upon with a predeterminable pressure by means of a spring (16) supported on a cover (6) closing the cup-shaped end of the guide tube, and that when a coupling exists between a receiving part (8) connected with the components of the reactor vessel and the housing (1) play exists between the yoke (15) and the base (17) of the end (12) — formed in a cup-shaped configuration — of the guide tube (10).

2. Nuclear reactor according to claim 1, characterised in that the envelope of the housing (1) is a cylinder, that this cylinder projects into a bore (8a) of the receiving part (8), and that the coefficient of thermal expansion of the materials of housing and receiving part is selected in such a manner that when the reactor pressure vessel is not subjected to· pressure the housing (1) is movable in the bore of the receiving part in an axial direction and with increasing temperature of the primary coolant disposed in the reactor vessel the envelope surface of the housing and the internal surface of the bore of the receiving part are pressed against one another with increasing pressure.

3. Nuclear reactor with a guide tube which penetrates the reactor vessel and in which a measuring instrument is movable, the interior of the guide tube being connected with the coolant of the reactor vessel and at its end disposed outside the reactor vessel being enlarged in a cup-shaped configuration, characterised in that the measuring instrument is a deflection detector enclosed in a housing (1), that the housing is connected with a flexible rod (5), that the rod· projects into the end (12) — formed in a cup- shaped configuration — of the guide tube (10) and is there connected with a piston (19), that the piston is movable together with the rod within the free end (12) — which acts as a cylinder and which is formed in a cup-shaped configuration — of the guide tube, so that a movement of the housing into its measurement position in a receiving part connected with the components of the reactor vessel or out of the receiving part can be effected, and that in order to control the movement the piston can be acted upon by different pressures.

4. Nuclear reactor according to claim 3, characterised in that the face of the piston facing towards the reactor vessel (13) is permanently acted upon by the pressure prevailing in the same and the opposite face of the piston can be acted upon by a pressure which is above or below this pressure.

5. Nuclear reactor according to claim 3 or 7 (sic), characterised in that the space (21) above the face of the piston facing away from the reactor vessel is selectively connected with the sealant water supply (22) of the principal coolant pump or with the suction side (26) thereof.

## Revendications

1. Réacteur nucléaire avec un tube de guidage pénétrant dans la cuve du réacteur et dans lequel peut être déplacé un instrument de mesure, l'intérieur du tube de guidage étant en communication avec le fluide de refroidissement de la cuve du réacteur, et s'élargissant en forme de pot à son extrémité située à l'extérieur de la cuve du réacteur, caractérisé en ce que l'instrument de mesure est un capteur d'amplitude de vibrations enfermé dans un boîtier (1), que le boîtier (1) est assemblé à une tige flexible (5), que la tige fait saillie dans l'extrémité (12) en forme de pot du tube de guidage (10) et y est assemblée à une plaque d'appui (15), que la plaque d'appui peut, par l'intermédiaire d'un ressort (16) qui s'appuie sur un couvercle (6) fermant l'extrémité (12) en forme de pot du tube de guidage (10), être sollicitée avec une pression prédéterminable, et que, lorsque le boîtier (1) est accouplé à une pièce réceptrice (8) assemblée aux éléments de structure à l'intérieur de la cuve du réacteur nucléaire, il existe un jeu entre la plaque d'appui (15) et le fond (17) de l'extrémité (12) en forme de pot du tube de guidage (10).

2. Réacteur nucléaire selon la revendication 1, caractérisé en ce que l'enveloppe du boîtier (1) est un cylindre, que ce cylindre fait saillie dans un alésage (8a) de la pièce réceptrice (8), et que les coefficients de dilatation thermique respectifs du matériau du boîtier (1) et du matériau de la pièce réceptrice (8) sont choisis de manière à permettre un déplacement axial du boîtier (1) dans l'alésage (8a) de la pièce réceptrice (8) lorsque la cuve du réacteur n'est pas sous pression, et de manière à ce que, lorsque la température du fluide de refroidissement primaire placé dans la cuve du réacteur augmente, la surface extérieure du boîtier et la surface intérieure de l'alésage de la pièce réceptrice soient comprimées l'une contre l'autre avec une pression croissante.

3. Réacteur nucléaire avec un tube de guidage pénétrant dans la cuve du réacteur et dans lequel peut être déplacé un instrument de mesure, l'intérieur du tube de guidage étant en communication avec le fluide de refroidissement de la cuve du réacteur, et s'élargissant en forme de pot à son extrémité située à l'extérieur de la cuve du réacteur, caractérisé en ce que l'instrument de mesure est un capteur d'amplitude de vibrations enfermé dans un boîtier (1), que le boîtier est assemblé à une tige flexible (5), que la tige fait saillie dans l'extrémité (12) en forme de pot du tube de guidage (10) et y est assemblée à un piston (19), que le piston est déplaçable conjointement avec la tige à l'intérieur de l'extrémité (12) en forme de pot du tube de guidage, laquelle joue le rôle d'un cylindre, permettant ainsi de déplacer le boîtier (1) en position de mesure dans une pièce réceptrice assemblée aux éléments de structure à l'intérieur de la cuve du réacteur, ou de sortir le boîtier de la pièce réceptrice, et que, afin de commander le mouvement du piston, ce dernier peut être sollicité avec des pressions différentes.

4. Réacteur nucléaire selon la revendication 3, caractérisé en ce que le côté du piston tourné vers la cuve (13) du réacteur reçoit en permanence la pression qui règne dans cette cuve, tandis que le côté opposé du piston peut recevoir une pression supérieure ou inférieure à la pression régnant dans la cuve.

5. Réacteur nucléaire selon la revendication 3 ou 4, caractérisé en ce que l'espace (21) situé au-dessus du côté du piston opposé à la cuve du réacteur est relié au choix à l'alimentation en eau d'interception (22) de la pompe de fluide de refroidissement principal ou au côté d'aspiration de cette pompe.

Fig.1a

Fig.1b

Fig.1c

Fig. 2

# Fig. 3

**0 072 564**

Fig. 4